# EUROPEAN PATENT SPECIFICATION

(11) **EP 1 559 666 B1**
(45) Date of publication and mention of the grant of the patent: **21.03.2007**
(21) Application number: 04002080.2
(22) Date of filing: 30.01.2004
(51) Int. Cl.: B65G 21/14, B65G 43/00

(54) **Telescopic belt conveyor**
Teleskopisch ausfahrbarer Bandförderer
Transporteur à bande télescopiquement extensible

(43) Date of publication of application: 03.08.2005
(73) Proprietor: Caljan Rite-Hite ApS, 8361 Hasselager (DK)
(72) Inventor: Petersen, Erik Steen, 8270 Hojbjerg (DK)
(74) Representative: Niederkofler, Oswald

(56) References cited:
- US-A- 3 835 980
- US-A1- 2003 029 694

## Description

### Technical Field

The present invention relates generally to extendable conveyors such as telescopic belt conveyors, and more particularly to a telescopic belt conveyor comprising a base conveyor section and at least two extendable conveyor sections according to the preamble of claim 1.

### Background Art

Telescopic belt conveyors of the introductory mentioned type are known and used in the art. For example, US-A-4 643 299 discloses a telescopic belt conveyor of the mentioned type and comprises a first basic conveyor section within a longitudinal housing, which at one end is provided with an opening, through which a number, by way of example two, three or more, of telescopic conveyor sections are arranged within each other. These telescopic conveyor sections may be telescopically moved in and out in relation to each other, as the respective conveyor sections are mutually connected by means of suitable system of drive members, such as drive chains, in relation to each other and in relation to said basic conveyor section, which is provided with a common drive system for controlling the telescopic movement.

An example of an extendable belt conveyor according to the preamble of claim 1 is disclosed in US 2003/0029694 A1. More particularly, an extendable boom or extension, which can be implemented on an extendable conveyor of conventional design is disclosed. The conveying portion of the extendable boom does not nest within an adjacent extendable unit. Thus, the width of the conveying portion may be equal to or larger than the conveying surface associated with the inwardly adjacent extendable unit. Only support members of the extendable boom are nested within the inwardly adjacent adjustable unit.

However, known telescopic belt conveyors are encumbered with some disadvantages which may course serious working accidents. There exists a considered risk for that the personal especially during the telescopic movement of the respective telescopic conveyor sections may get hands or fingers squeezed between the respective conveyor sections. Another considered disadvantage is, that the drive chains of the intermediate conveyor sections and the conveyor belt itself may cause risk for damage or injury es-pecially of hands and fingers by virtue of the undersides of the sections being exposed during outward and inward telescopic movements.

On this background it is the purpose of the invention to provide a new and improved telescopic belt conveyor of the introductory mentioned type and by means of which the said disadvantages may be avoided in a simple manner and where the risks for damaging especially hands and fingers are avoided.

### Disclosure of Invention

According to a first aspect, the invention provides a telescopic belt conveyor in accordance with independent claim 1. Further aspects of the invention are set forth in the dependent claims, the drawings and the following description. Hereby is achieved the effect of preventing penetration into the conveyor sections by hands or fingers, whereby at the same time it is possible to avoid said disadvantages including said personal damages especially of hands, fingers or other body parts.

In a simple manner according to one embodiment the sprocket wheels for leading the elongate drive members (chains) between the respective conveyor sections are placed in such a height, that the respective runs of said drive chains may be led through open rear walls of said intermediate telescopic conveyor sections and be anchored to a rear end part of one of said cooperating telescopic conveyor sections.

If a person by accident engages the underside of the conveyor section with hands or fingers during the telescopic movement between the conveyor section, when these are moved inwardly, the fact that the undersides of the telescopic conveyor sections may be provided with smooth and closed surfaces the said disadvantages or risks for damaging the hands or fingers may simply be prevented.

According to a preferred embodiment of the telescopic belt conveyor according to the invention one of said sprocket wheels for leading said upper run of the drive chain between said basic conveyor section and one of said intermediate conveyor sections is mounted on the inside of the rear wall of said basic conveyor section.

According to another preferred embodiment of the telescopic belt conveyor according to the invention one of said sprocket wheels for leading said upper run of the drive chain between said basic conveyor section and to a rear end of a second of said number of intermediate conveyor sections is mounted on the outside of the rear wall a first of said number of intermediate conveyor sections.

According to a further preferred embodiment of the telescopic belt conveyor according to the invention one of said sprocket wheels for leading said upper run of the drive chain between a first of said number of intermediate conveyor section and to a rear end of said outermost conveyor section is mounted on the outside of the rear wall of a second of said number of intermediate conveyor sections.

The telescopic belt conveyor according to the invention may furthermore be provided such that anchor points for the drive chains of the intermediate conveyor sections have a raised position in relation to the bottom of the conveyor sections in question. Hereby is achieved that the combination of the chain guard, the raised anchor points and the belt guard present a practical closed bottom, although not the complete closed bottom of the preferred embodiment.

According to a still further aspect of the invention it may be advantageous, that at least said drive chains for operating said telescopic movement between said intermediate conveyor sections and said outermost telescopic conveyor are substituted by wires led over wire wheels substituting said sprocket wheels.

Only between the normally stationary basic conveyor section and the first of said number of intermediate telescopic conveyor section it is of particular importance that use are made of drive chains in order to secure accurate control of the operation of the telescopic movement because of the common drive-station operating with drive sprocket wheels and drive chains.

However, between the other telescopic conveyor sections it might be a considerably cheaper solution to make use of simple steel wires instead of more expensive drive chains, because the drive connections between said other telescopic conveyor section do not need the same accuracy because of the more simple mode of mutually cooperation. Of course it is of particular importance that the accuracy of the individual lengths and the proper tightening of the respective steel wires are secure in order to obtain optimal operation of the telescopic belt conveyor in question.

According to a still further and advantageous embodiment of the telescopic belt conveyor according to the invention there is provided a common control system with an integrated security system, which telescopic belt conveyor is characterized in that said security system comprises electric brake means, which are adapted to engage between the respective conveyor sections.

The brake means are controlled in such a manner, that they automatically brake any telescopic movement of the respective conveyor sections, whether due to power failure, broken chains breaking, activation of security switches, or deactivation of the powered extension or retraction of the telescopic sections.

To achieve this function, the brakes means may be biased into a braking configuration, such as by springs, and powered or actuated into a release position. In this way, any action which would interrupt the power necessary to maintain the brakes means in the release position would cause the brake means to engage and stop any telescopic movement.

### Brief Description of Drawings

The invention is described in more details with reference to the accompanying drawings, in which:
- Fig. 1: shows a schematic plane side view of the course of said endless conveyor belt in an embodiment for a telescopic belt conveyor according to the invention,
- Fig. 2: shows a corresponding side view of an outer part of the telescopic belt conveyor shown in Fig. 1,
- Fig. 3: shows a plane schematic side view of an embodiment for a telescopic belt conveyor according to the invention - shown with the telescopic sections in a moved together situation,
- Fig. 4: shows a corresponding plane view of the course of drive chains between the respective telescopic conveyor sections - shown in a partly moved out position in relation to a basic conveyor section,
- Fig. 5: shows a side view of a outermost part of the telescopic belt conveyor shown in Fig. 4,
- Fig. 6: shows a simplified side sectional view through an outermost part of the belt conveyor cf. Fig. 3,
- Fig. 7: shows an enlarged circular sectional view B cf. Fig. 6,
- Fig. 8: shows a simplified transverse sectional view through an outermost part of the telescopic belt conveyor cf. Fig. 3,
- Fig. 9: shows an enlarged circular sectional view C cf. Fig. 8,
- Fig. 10: shows a plane schematic side view of a preferred embodiment for a telescopic belt conveyor according to the invention - shown with the telescopic sections in a moved together situation,
- Fig. 11: shows a corresponding plane view of the course of drive chains between the respective telescopic conveyor sections - shown in a partly moved out position in relation to a basic conveyor section, and
- Fig. 12: shows a transverse sectional view through said preferred embodiment for a telescopic belt conveyor according to the invention.

### Detailed Description of Invention

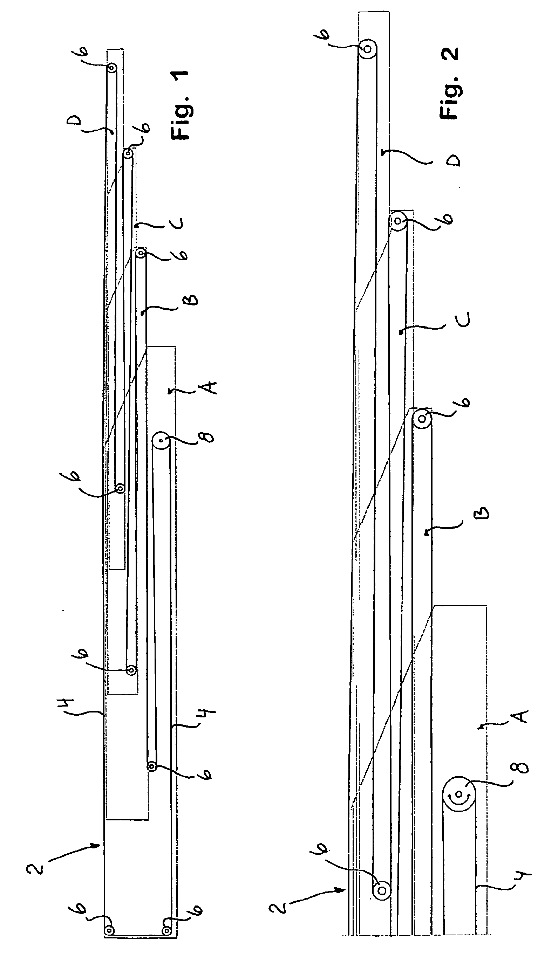

The telescopic belt conveyor 2 comprises four sections, namely a basic section A, two intermediate sections B and C and an outermost section D. The sections B, C and D may be moved in and out in a telescopic manner in relation to each other and in relation to the basic section A. The belt conveyor 2 comprises an endless conveyor belt 4, which cf. Figs 1 and 2 is lead around a number of stationary reversing rollers 6 in the respective sections A-D, and which is driven by a common, reversible drive roller 8, which is positioned in section A, and which is driven by a motor, illustratively an electric driving motor, although hydraulic or other motor types could be used.

The telescopic movement of the sections B-C may be carried out in a varity of ways. In this embodiment, it is carried out by means of elongated drive members in the form of chains 10, 12, 14, 16 and 18, which are disposed at opposite long sides of the belt conveyor 2. The drive chains 10, 12, 14, 16 and 18 run between the respective sections A-D around stationary sprocket wheels, as opposite ends of each of the drive chains 10, 12, 14, 16 and 18 are anchored to two sections. The drive chains 10 are furthermore led around driving sprocket wheels 22, which are placed in the front end of section A, and which are driven by means of a not shown reversible electric driving motor. End parts of the drive chains 10 are at 24 anchored to a rearmost end part of section B, from where the drive chains 10 are led around stationary sprocket wheels 20 in rearmost end of the basic section A and forward around stationary sprocket wheels 21, around the drive sprocket wheels 22 and back again around stationary sprocket wheels 23 to anchor points 26 at the underside of section B in some distance in front of the rearmost end of section B.

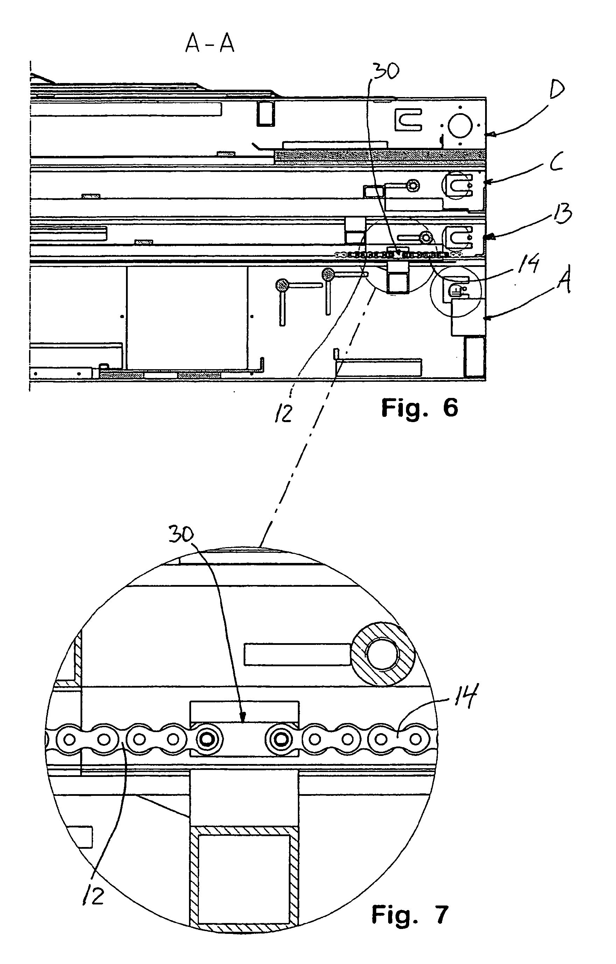

Similarly, end parts of the drive chains 12 are rearmost in section C anchored at 28, from where the drive chains 12 are led around stationary sprocket wheels 20 placed in the rearmost end of section B and forward to the rear sides of cranking chain mountings 30 (Fig. 7) in the front end of basic section A. End parts of the drive chains 14 are anchored to the front side of the same chain mounting 30 in the front end of basic section A, from where the drive chains 14 are led forward and around stationary sprocket wheels in the front end of section B and again backwards to anchor points 32 at the underside of section C in some distance in front of the anchor points 28.

In a similar manner, end parts of the drive chains 16 are anchored at 34 rearmost in section D, from where the drive chains 16 are led backwards around stationary sprocket wheels placed rearmost in section C and again forward to the rear sides of cranking chains mountings 30 in the front of section B. End parts of the drive chains 18 are anchored to the front sides of the same chain mounting 30 in the front of section B, from where the drive chains 18 are led forward and around stationary sprocket wheels 20 in the front end of section C and again led backwards to anchor points 36 at the underside of section D in some distance in front of the anchor points 34.

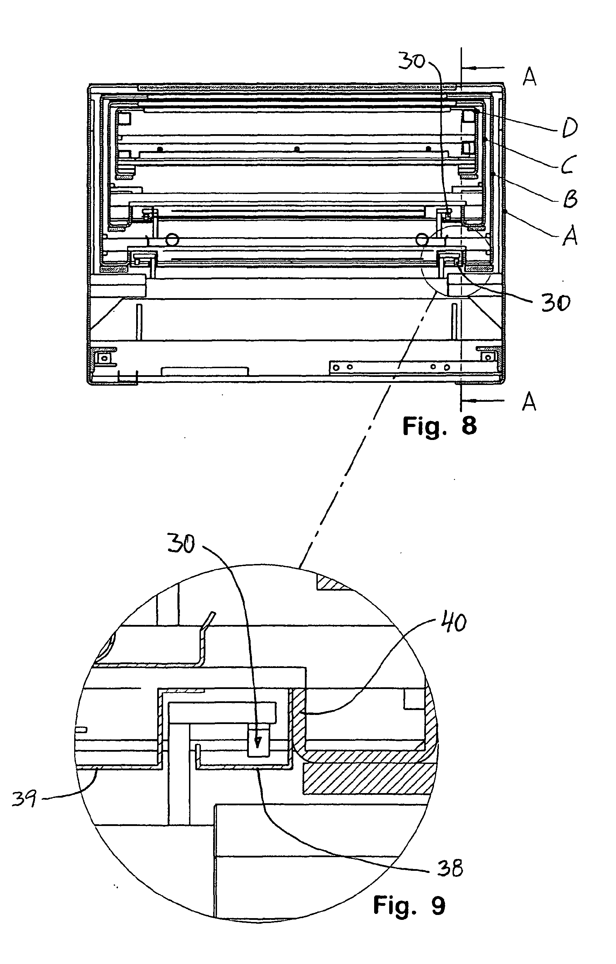

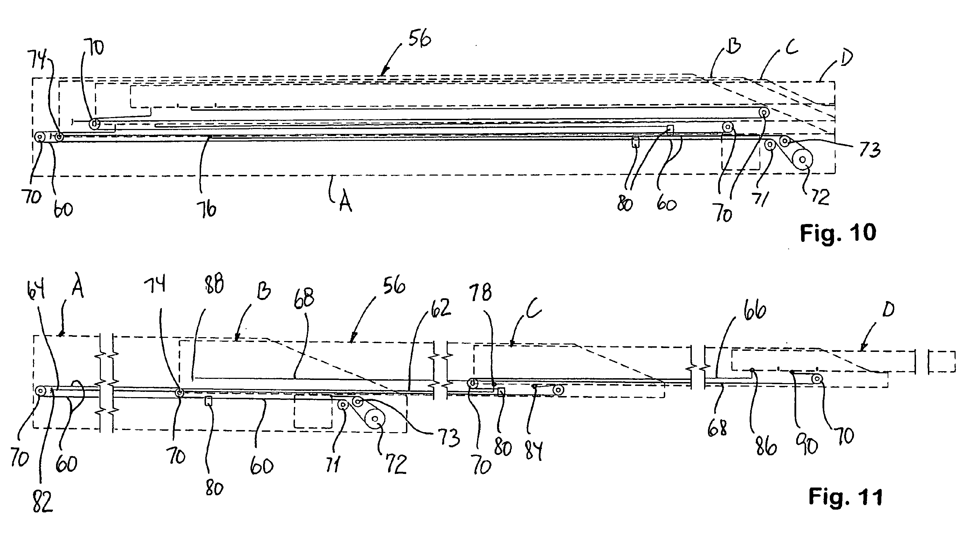

Figs. 6-9 show the position and more details about said cranking chain mountings 30, which are placed in the front ends of sections A and B, and which are used for the anchoring of end parts of the drive chains 12, 14, 16 and 18. Furthermore Figs. 8 and 9 show longitudinal coverings 38 for the lower course of the drive chains 14 and 18 by the intermediate sections B and C. These longitudinal coverings 38 are at both sides of the belt conveyor 2 suspended at the inside of longitudinal carrying girders 40 of the intermediate sections B and C.

The longitudinal coverings are made possible by the configuration of cranking mountings 30, which serve to raise the lower runs of chains 12, 14, 16 and 18 above their conventional positions without chain mountings 30. Absent this raising of the lower runs of the chains, the longitudinal coverings are not possible, as they would be in an interfering position between sections such as would prevent proper telescopic operation.

Preferably, the entire underside of each the telescopic conveyor sections is closed by the combination of the chain guard 38 and the belt guard 39 - shown to the left of fig. 9. The raised anchor points 30 for the chains allows the chain guard 38 to be positioned as it is, and fills the side gap that used to exist where the belt guard 39 ended and the unguarded chains ran. The combination of the chain guard 38, the bracket for holding mountings 30 and the belt guard 39 present what is in effect a closed bottom, although not the complete closed bottom of the preferred embodiment.

In general it applies that the respective conveyor sections B, C and D mutually and in relation to the basis conveyor section - as per see known - are supported and guided in the transverse direction by means of stationary rollers provided with external guiding flanges being cooperating with longitudinal carrying girders.

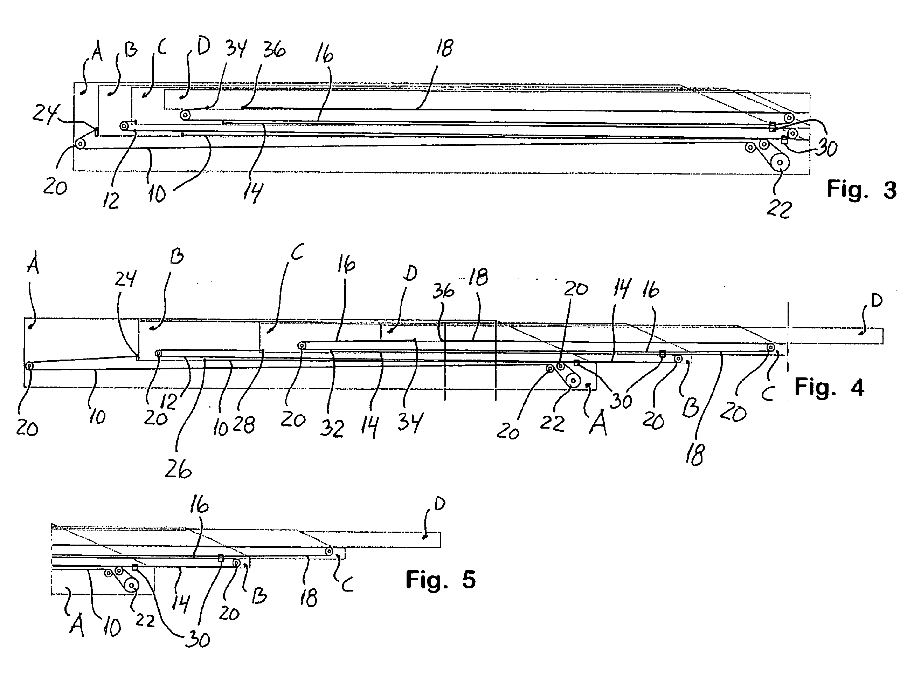

By a preferred embodiment for a telescopic belt conveyor 56 the course of the endless conveyor belt 4 in principle is quite the same as shown in Figs. 1 and 2, while the course of the respective drive chains as shown in Figs. 10-12 is indeed different than that of the course of the drive chains 10, 12, 14, 16 and 18 by the telescopic belt conveyor 2 as described above with reference to Figs. 3-9.

The telescopic belt conveyor 56 comprises four sections, namely a basic section A, two intermediate sections B and C and an outermost section D. The sections B, C and D may be moved in and out in a telescopic manner in relation to each other and in relation to the basic section A. The belt conveyor 56 comprises an endless conveyor belt 4, which cf. Figs 1 and 2 is lead around a number of stationary reversing rollers 6 in the respective sections A-D, and which is driven by a common, reversible drive roller 8, which is positioned in section A, and which is driven by a motor such as an electric or hydraulic driving motor.

The telescopic movement of the sections B-C is carried out by means of drive chains 60, 62, 64, 66 and 68, which are disposed at opposite longitudinal sides of the belt conveyor 56 runs between the respective sections A-D around sprocket wheels being mounted stationary in the respective sections A-D, as opposite ends of each of the drive chains 60, 62, 64, 66 and 68 are anchored to two sections. The drive chains 60 are furthermore led around driving sprocket wheels 72, which are placed in the front end of section A, and which are driven by means of a not shown reversible electric or other driving motor. End parts of the drive chains 60 are at 74 anchored to a rearmost end part of section B, from where the drive chains 60 are led around stationary sprocket wheels 70 in rearmost end of the basic section A and forward around stationary sprocket wheels 71, around the drive sprocket wheels 72 and back again around stationary sprocket wheels 73 to anchor points 76 at the underside of section B in some distance in front of the rearmost end of section B.

End parts of the drive chains 62 are rearmost in section C anchored at 78, from where the drive chains 62 are led around sprocket wheels 70 mounted on the rearmost wall section B and forward to chain mountings 80 in the front end of basic section A. End parts of the drive chains 64 are anchored near the rearmost end of section A at 82, from where the drive chains 64 are led forward and around stationary sprocket wheels 70 in the front end of section B and again backwards to anchor points 84 at the underside of section C in some distance in front of the anchor points 78.

End parts of the drive chains 66 are anchored at 86 rearmost in section D, from where the drive chains 66 are led backwards around sprocket wheels 70 mounted on the rearmost wall of section C and again forward to chains mountings 80 in the front of section B. End parts of the drive chains 68 are near the rearmost end of section B at 88, from where the drive chains 68 are led forward and around stationary sprocket wheels 70 in the front end of section C and again led backwards to anchor points 90 at the underside of section D in some distance in front of the anchor points 86.

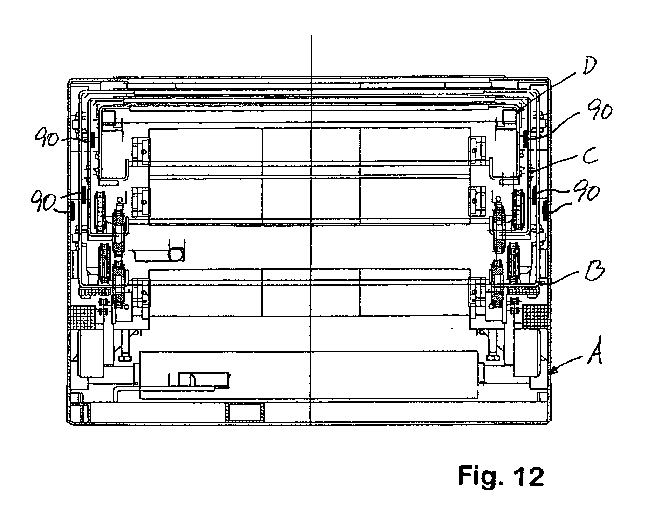

Fig. 12 shows that the various sprockets wheels 70 must be offset laterally to achieve the orientation of the chains shown in Figs. 10 and 11.

The above-described arrangement of the drive chains in this embodiment results in the fact that there is an absence of any chain runs (top or bottom) passing through the plane defined by the bottom of sections B, C or D, or at least the parts thereof exposed during telescopic movement. As a result, the undersides of these sections or at least the parts of the undersides being exposed during the telescopic movement may be provided with closed coverings preventing any possible penetration into the underside of the sections and thus preventing accidents with the results of damaging hands, fingers or other body parts, which could otherwise be damaged or injured by engaging said undersides during said telescopic movement.

The advantage is provided by the fact that the anchor points 82 and 88 for drive chains 64 and 68 are positioned at the rearmost walls of section A and B and are disposed at a suitable height to allow their bottom runs to be let through opening in the rear of sections B and C and stay above the undersides thereof. Further, the sprocket wheels 70 being mounted at the rearmost walls of sections B and C and at the bottom thereof makes is possible that also the drive chains 62 and 66 may be let through openings in the rear walls of sections B and C, and then have a lower run below the underside of the respective sections, but only in an area that will not be exposed during the telescopic movements Accordingly, the undersides of these sections or at least the parts of the undersides being exposed during the telescopic movements may be provided with the closed coverings.

In Fig. 12 the aforementioned brake means between the respective telescopic conveyor sections A-D is designated 90 - preferably the braking means 90 are mounted on the outer of the conveyor sections - or in words the braking means 90 for braking the mutual telescopic movement between the basic conveyor section A and the intermediate conveyor section B are mounted on the outer basic conveyor section A.

Alternatively, the telescopic belt conveyor according to the invention may be such provided, that at least a lower part of said drive chains of said intermediate telescopic conveyor sections and at least at an outer partial sector, which is exposed by executing said telescoping out of said conveyor sections, is covered downwardly by means of a longitudinal covering.

According to the invention the telescopic belt conveyor may furthermore be such provided, that said longitudinal covering consists of a covering with mainly L-shaped cross section, which is detachably mounted underneath said partial sector.

And in order to be able to get direct access to the drive chains for service the telescopic belt conveyor according to the invention may be such provided, that said mainly L-shaped cross-section provided covering at a rear side is provided with a number of mutually spaced hooks or the like, which are adapted for suspending the covering on the inside of longitudinal, carrying girders at opposite sides of said intermediate conveyor sections.

Finally, it should be mentioned, that a possible further embodiment for a telescopic belt conveyor according to the invention may be provided such, that the telescopic movement of the respective conveyor section is effected by means of a drive system comprising only drive chains led over sprocket wheels between the respective conveyor sections at one side of the belt conveyor.

## Claims

1. A telescopic belt conveyor comprising:
a basic conveyor section (A),
a number of intermediate telescopic conveyor sections (B, C),
an outermost telescopic conveyor section (D), and
an endless conveyor belt (4) constituting an active conveying track of said conveyor sections, said conveyor sections (A, B, C, D) are drive-connected with a common drive system,
said conveyor sections (A, B, C, D) are mutually connected by means of a number of elongate drive members (10, 12, 14, 16, 18; 60, 62, 64, 68), each adapted to drive an associated conveyor section (B, C, D), said drive members being in the form of chains which are lead over sprocket wheels (20, 21, 22, 23; 70, 71, 72, 73) for executing telescopic movement in and out of said telescopic conveyor sections by means of a common drive unit (8), **characterized in that:**
at least the outermost parts of said telescopic conveyor sections (B, C, D), which are exposed during said telescopic movement, are covered underside by means of one bottom cover section or several partial cover sections (38, 39).

2. The telescopic belt conveyor according to claim 1, wherein the sprocket wheels (20, 21, 22, 23; 70, 71, 72, 73) for leading the elongate drive members (10, 12, 14, 16, 18; 60, 62, 64, 68) between the respective conveyor sections (A, B, C, D) are placed in such a height that the respective runs of said elongate drive members may be led through open rear walls of said intermediate telescopic conveyor sections (B, C) and be anchored to a rear end part of one of said cooperating telescopic conveyor sections (A, B, C, D).

3. The telescopic belt conveyor according to claim 1, wherein one of said sprocket wheels (20, 21, 22, 23; 70, 71, 72, 73) for leading said upper run of the drive chain between said basic conveyor section and one of said intermediate conveyor sections is mounted on the inside of the rear wall of the basic conveyor section (A).

4. The telescopic belt conveyor according to claim 1, wherein one of said sprocket wheels (20, 21, 22, 23; 70, 71, 72, 73) for leading said upper run of the elongate drive member (10, 12, 14, 16, 18; 60, 62, 64, 68) between said basic conveyor section (A) and to a rear end of a second of said number of intermediate conveyor sections (B, C) is mounted on the outside of the rear wall of a first of said number of intermediate conveyor sections (B, C).

5. The telescopic belt conveyor according to claim 1, wherein one of said sprocket wheels (20, 21, 22, 23; 70, 71, 72, 73) for leading said upper run of the elongate drive member between a first of said number of intermediate conveyor section (B, C) and to a rear end of said outermost conveyor section (D) is mounted on the outside of the rear wall of a second (B, C) of said number of intermediate conveyor sections (A, B, C, D).

6. The telescopic belt conveyor according to claim 1, wherein anchor points for the elongate drive members (10, 12, 14, 16, 18; 60, 62, 64, 68) of the intermediate conveyor sections (B, C) have a raised position in relation to the bottom of the conveyor sections (B, C; D) in question.

7. The telescopic belt conveyor according to claim 1, wherein said elongate drive members for operating said telescopic movement between said intermediate conveyor sections (B, C) and said outermost telescopic conveyor section (D) are substituted by wire ropes or similar led over sheaves substituting said sprocket wheels (20, 21, 22, 23; 70, 71, 72, 73).

8. The telescopic belt conveyor according to claim 1, comprising an electric control system with an integrated security system, wherein said security system comprises electric brake means (90), which are adapted to engage between the respective conveyor sections (A, B, C, D).

9. The telescopic belt conveyor according to claim 8, wherein the brake means (90) is adapted to engage whenever telescopic movement is stopped, by at least one of power failure, chains breaking, activation of touch-activated means, or by an operator taking his finger off a motor control.

10. The telescopic belt conveyor according to claim 8, wherein the brake means (90) is adapted to be biased in a closed position, and actuated to a release position in response to a power failure.

## Patentansprüche

1. Teleskop-Bandförderer umfassend:
einen Basis-Förderabschnitt (A),
eine Anzahl von zwischenliegenden Teleskop-Förderabschnitten (B, C),
einen äußersten Teleskop-Förderabschnitt (D),
ein Endlos-Förderband (4), welches eine aktive Förderstrecke der Förderabschnitte bildet, wobei die Förderabschnitte (A, B, C, D) mit einem gemeinsamen Antriebssystem antriebsmäßig verbunden sind, wobei
die Förderabschnitte (A, B, C, D) gegenseitig durch eine Anzahl von sich erstreckenden Antriebsgliedern (10, 12, 14, 16, 18; 60, 62, 64, 68) verbunden sind,
die jeweils ausgestaltet sind, einen zugehörigen Förderabschnitt (B, C, D) anzutreiben, wobei die Antriebsglieder kettenartig sind und über Zahnräder (20, 21, 22, 23; 70, 71, 72, 73) geführt sind, um eine Teleskopbewegung der Teleskop-Förderabschnitte nach innen und außen durch eine gemeinsame Antriebseinheit (8) auszuführen,
**dadurch gekennzeichnet, daß**
wenigstens die äußersten Teile der Teleskop-Förderabschnitte (B, C, D), welche während der Teleskopbewegung freigelegt sind, auf der Unterseite durch ein unteres Abdeckungsteil oder mehrere Teilabdeckungsabschnitte (38, 39) abgedeckt sind.

2. Teleskop-Bandförderer nach Anspruch 1, bei welchem die Zahnräder (20, 21, 22, 23; 70, 71, 72, 73) zur Führung der sich erstreckenden Antriebsglieder (10, 12, 14, 16, 18; 60, 62, 64, 68) zwischen den entsprechenden Förderabschnitten (A, B, C, D) so in einer Höhe plaziert sind, daß der entsprechende Verlauf der sich erstreckenden Antriebsglieder durch offene hintere Wände der zwischenliegenden Teleskop-Förderabschnitte (B, C) geführt werden kann und an einem hinteren Endteil eines der zusammengehörigen Teleskop-Förderabschnitte (A, B, C, D) verankert werden kann.

3. Teleskop-Bandförderer nach Anspruch 1, bei welchem eines der Zahnräder (20, 21, 22, 23; 70, 71, 72, 73) zum Führen des oberen Verlaufs der Antriebskette zwischen dem Basis-Förderabschnitt und einem der zwischenliegenden Förderabschnitte an der Innenseite einer Rückwand des Basis-Förderabschnitts (A) angebracht ist.

4. Teleskop-Bandförderer nach Anspruch 1, bei welchem eines der Zahnräder (20, 21, 22, 23; 70, 71, 72, 73) zum Führen des oberen Verlaufs der sich erstreckenden Antriebsglieder (10, 12, 14, 16, 18; 60, 62, 64, 66, 68) zwischen dem Basis-Förderabschnitt (A) zu einem hinteren Ende des zweiten der Anzahl von zwischenliegenden Förderabschnitten (B, C) an der Außenseite der Rückwand eines ersten der Anzahl zwischenliegender Förderabschnitte (B, C) angebracht ist.

5. Teleskop-Bandförderer nach Anspruch 1, bei welchem eines der Zahnräder (20, 21, 22, 23; 70, 71, 72, 73) zum Führen des oberen Verlaufs der sich erstreckenden Antriebsglieder zwischen einem ersten der Anzahl von zwischenliegenden Förderabschnitten (B, C) zu einem hinteren Ende des äußersten Förderabschnittes (D) auf der Außenseite der Rückwand eines zweiten (B, C) der Anzahl zwischenliegender Förderabschnitte (A, B, C, D) angebracht ist.

6. Teleskop-Bandförderer nach Anspruch 1, bei welchem Ankerpunkte der sich erstreckenden Antriebsglieder (10, 12, 14, 16, 18; 60, 62, 64, 68) der zwischenliegenden Förderabschnitte (B, C) eine erhöhte Position bezüglich des Bodens der in Frage kommenden Förderabschnitte (B, C; D) haben.

7. Teleskop-Bandförderer nach Anspruch 1, bei welchem die sich erstreckenden Antriebsglieder zum Ausführen der Teleskopbewegung zwischen den zwischenliegenden Förderabschnitten (B, C) und dem äußersten Teleskop-Förderabschnittes (D) durch Drahtseile oder ähnliches ersetzt sind, die über Seilscheiben laufen, die die Zahnräder (20, 21, 22, 23; 70, 71, 72, 73) ersetzen.

8. Teleskop-Bandförderer nach Anspruch 1, umfassend ein elektrisches Steuersystem mit einem integrierten Sicherheitssystem, bei welchem das Sicherheitssystem ein elektrisches Bremsmittel (90) umfaßt, welches eingerichtet ist zwischen den entsprechenden Förderabschnitten (A, B, C, D) einzugreifen.

9. Teleskop-Bandförderer nach Anspruch 8, bei welchem das Bremsmittel (90) eingerichtet ist einzugreifen, wenn die Teleskopbewegung durch beispielsweise einen Stromversorgungsfehler, Kettenbruch, eine Aktivierung von einem berührempfindlichen Mittel, oder durch einen Benutzer, der seinen Finger von einer Motorsteuerung nimmt, gestoppt ist.

10. Teleskop-Bandförderer nach Anspruch 8, bei welchem das Bremsmittel (90) eingerichtet ist, in einer geschlossenen Position vorgespannt zu sein, und ansprechend auf einen Stromfehler in eine Freigabestellung ausgelöst zu werden.

## Revendications

1. Convoyeur à courroie télescopique comprenant :
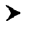 une section de convoyeur de base (A),
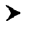 un certain nombre de sections de convoyeur télescopique intermédiaires (B, C),
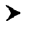 une section de convoyeur télescopique située le plus à l'extérieur (D), et
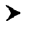 une courroie de convoyeur sans fin (4) constituant un rail de transport actif desdites sections de convoyeur, lesdites sections de convoyeur (A, B, C, D) sont raccordées par entraînement avec un système d'entraînement commun,
lesdites sections de convoyeur (A, B, C, D) sont raccordées mutuellement au moyen d'un certain nombre d'éléments d'entraînement allongés (10, 12, 14, 16, 18 ; 60, 62, 64, 68), chacune adaptée pour entraîner une section de convoyeur associée (B, C, D), lesdits éléments d'entraînement se présentant sous la forme de chaînes qui sont amenées sur des roues à pignon (20, 21, 22, 23 ; 70, 71, 72, 73) pour exécuter le mouvement télescopique à l'intérieur et à l'extérieur desdites sections de convoyeur télescopique au moyen d'une unité d'entraînement commune (8), **caractérisé en ce que** :
au moins les parties situées le plus à l'extérieur desdites sections de convoyeur télescopique (B, C, D), qui sont exposées pendant ledit mouvement télescopique, sont recouvertes au-dessous au moyen d'une section de couvercle inférieure ou de plusieurs sections de couvercle partielles (38, 39).

2. Convoyeur à courroie télescopique selon la revendication 1, dans lequel les roues à pignon (20, 21, 22, 23 ; 70, 71, 72, 73) pour amener les éléments d'entraînement allongés (10, 12, 14, 16, 18 ; 60, 62, 64, 68) entre les sections de convoyeur (A, B, C, D) respectives sont placées dans une telle hauteur que les courses respectives desdits éléments d'entraînement allongés peuvent être amenées à travers des parois arrière ouvertes desdites sections de convoyeur télescopique intermédiaires (B, C) et être ancrées à une partie d'extrémité arrière de l'une desdites sections de convoyeur télescopique coopérantes (A, B, C, D).

3. Convoyeur à courroie télescopique selon la revendication 1, dans lequel l'une desdites roues à pignon (20, 21, 22, 23 ; 70, 71, 72, 73) pour amener ladite course supérieure de la chaîne d'entraînement entre ladite section de convoyeur de base et l'une desdites sections de convoyeur intermédiaires est montée sur l'intérieur de la paroi arrière de la section de convoyeur de base (A).

4. Convoyeur à courroie télescopique selon la revendication 1, dans lequel l'une desdites roues à pignon (20, 21, 22, 23 ; 70, 71, 72, 73) pour amener ladite course supérieure dudit élément d'entraînement allongé (10, 12, 14, 16, 18 ; 60, 62, 64, 68) entre ladite section de convoyeur de base (A) et jusqu'à une extrémité arrière d'une seconde dudit certain nombre de sections de convoyeur intermédiaires (B, C) est montée sur l'extérieur de la paroi arrière d'une première dudit certain nombre de sections de convoyeur intermédiaires (B, C).

5. Convoyeur à courroie télescopique selon la revendication 1, dans lequel l'une desdites roues à pignon (20, 21, 22, 23 ; 70, 71, 72, 73) pour amener ladite course supérieure de l'élément d'entraînement allongé entre une première dudit certain nombre de sections de convoyeur intermédiaires (B, C) et jusqu'à une extrémité arrière de ladite section de convoyeur située le plus à l'extérieur (D) est montée sur l'extérieur de la paroi arrière d'une seconde (B, C) dudit certain nombre de sections de convoyeur intermédiaires (A, B, C, D).

6. Convoyeur à courroie télescopique selon la revendication 1, dans lequel des points d'ancrage pour les éléments d'entraînement allongés (10, 12, 14, 16, 18 ; 60, 62, 64, 68) des sections de convoyeur intermédiaires (B, C) ont une position relevée par rapport au fond des sections de convoyeur (B, C, D) en question.

7. Convoyeur à courroie télescopique selon la revendication 1, dans lequel lesdits éléments d'entraînement allongés pour actionner ledit mouvement télescopique entre lesdites sections de convoyeur intermédiaires (B, C) et ladite section de convoyeur télescopique située le plus à l'extérieur (D) sont remplacés par des câbles ou des fils de sortie similaires sur des poulies remplaçant lesdites roues à pignon (20, 21, 22, 23 ; 70, 71, 72, 73).

8. Convoyeur à courroie télescopique selon la revendication 1, comprenant un système de commande électrique avec un système de sécurité intégré, dans lequel ledit système de sécurité comprend des moyens de freinage électriques (90), qui sont adaptés pour se mettre en prise entre les sections de convoyeur (A, B, C, D) respectives.

9. Convoyeur à courroie télescopique selon la revendication 8, dans lequel les moyens de frein (90) sont adaptés pour se mettre en prise chaque fois que le mouvement télescopique est arrêté, par au moins l'un parmi une panne de courant, une rupture des chaînes, l'activation de moyens tactiles, ou par un opérateur qui retire son doigt d'une commande de moteur.

10. Convoyeur à courroie télescopique selon la revendication 8, dans lequel les moyens de frein (90) sont adaptés pour être sollicités dans une position fermée et actionnés dans une position de déblocage en réponse à une panne de courant.
